# EUROPEAN PATENT APPLICATION

(11) **EP 2 904 912 A1**
(43) Date of publication of application: **12.08.2015**
(21) Application number: 14154374.4
(22) Date of filing: 07.02.2014
(51) Int. Cl.: A23L 3/015, A23L 3/3571

(54) **Novel high pressure method with endolysin for processing of foods**

(71) Applicant: Hyglos Invest GmbH, 82347 Bernried (DE)
(72) Inventor: The designation of the inventor has not yet been filed
(74) Representative: Grünecker Patent- und Rechtsanwälte PartG mbB

(57) **Abstract**

The present invention provides a method for processing a food comprising subjecting the food to a treatment with high hydrostatic pressure (HHP) and an endolysin from a bacteriophage of a Gram-positive bacterium. The present invention also relates to food packaged in an HHP-compatible packaging. In a preferred embodiment, the endolysin is present inside such a packaging, preferably in contact with the packed food. In a further preferred embodiment endolysin, e.g. from a bacteriophage of a Gram-positive bacterium, is applied to the food, the food is packed so that the endolysin is inside the packaging and afterwards the packaging is closed and HHP is applied.

## Description

### TECHNICAL FIELD

The present invention relates to the field of high pressure processing of foods, pharmaceutical compositions and cosmetics. In particular, the present invention relates to a method for processing a food comprising subjecting the food to a treatment with high hydrostatic pressure (HHP) and an endolysin, e.g. from a bacteriophage of a Gram-positive bacterium. The present invention also relates to food packaged in an HHP-compatible packaging. In a preferred embodiment, the endolysin is present inside such a packaging, preferably in contact with the packed food. In a further preferred embodiment endolysin, e.g. from a bacteriophage of a Gram-positive bacterium, is applied to the food, the food is packed so that the endolysin is inside the packaging and afterwards the packaging is closed and HHP is applied.

### BACKGROUND OF THE INVENTION

Food-borne diseases are a serious and widespread global public health threat. In the European Union (EU), over 320,000 human cases are reported each year, but the real number is likely to be much higher (EFSA, 2013). Food-borne diseases are caused by consuming food contaminated by pathogenic (disease-causing) microorganisms such as bacteria, viruses and parasites. The risks of contamination require prevention and control throughout the food chain.

High pressure processing is one of the emerging technologies of food processing methods. This technology, called high hydrostatic pressure (HHP), is currently in use in the food industry for control of pathogenic bacteria in food products. HHP can be applied as an alternative to thermal processing (pasteurization), the more conventional food preservation technique.

The use of non-thermal treatment approaches can be combined with bactericidal compounds to contribute to food microbial safety and shelf-life prolongation. This was demonstrated with lysozymes in the inactivation of the Gram-positive bacteria. For example Gram-positive microorganisms such as *Lactobacillus johnsonii,* are rapidly killed by lysozyme treatment due to peptidoglycan degradation in the bacterial cell wall. However, *Staphylococcus aureus, also* Gram-positive, was resistant to lysozyme treatment. When HHP (270 MPa-400MPa for 15 min) was combined with the lysozyme HEWL (100 µg/ml) the inactivation of *Staphylococcus aureus* and likewise Gram-positive *Listeria innocua* did not involve hydrolytic peptidoglycan degradation nor the formation of spheroplasts (Masschalck et al. 2002). While Gram-positive microorganisms can be killed due to lysozymes degrading the peptidoglycan in the bacterial cell wall, Gram-negative bacteria are insensitive to lysozymes since they possess an outer membrane that shields their murein (peptidoglycan) layer. However, Gram-negative bacteria can be sensitized to lysozymes by permeabilization of the outer membrane by HHP treatment. This approach was proven to efficiently inactivate several Gram-negative pathogens (Nakimbugwe et al. 2006).

Bacteriophages (or phages) are viruses that specifically target and infect bacterial cells. Phages are harmless to humans and animals, and can therefore be used to control bacterial pathogens in food. Phages have been shown to be resistant up to 400 MPa, and the combined use of HHP and phage treatment was able to reduce *S*. *aureus* contamination below the detection limit (Tabla et al. 2012). In this approach, the phages were used as additional hurdles to prevent the recovery of cells that were only sub-lethally injured after HHP treatment. The principle of hurdle technology is commonly applied to food processing methods and usually works by combining more than one approach.

Regarding HHP as a food-processing technology, the greater the pressure level and/or time of application, the greater the potential for changes in the appearance of selected foods. This holds true in particular for raw, high-protein foods where pressure-induced protein denaturation will be visually evident. High hydrostatic pressures also can cause structural changes in structurally fragile foods such as strawberries or lettuce. Cell deformation and cell membrane damage can result in softening and cell serum loss. Usually these changes are undesirable because the food will appear to be processed and no longer fresh or raw. Furthermore, the cost of pressure equipment rises with the maximum operating pressure.

Therefore, there is a need for an HHP-based processing for the preservation of foods, which obtains desirable levels of pathogen inactivation while reducing the pressure level and/or time of HHP application. The present invention addresses this need as explained in the following.

### SUMMARY OF THE INVENTION

The present invention provides a method for processing a food comprising subjecting the food to a treatment with high hydrostatic pressure (HHP) and an endolysin from a bacteriophage of a Gram-positive bacterium. The present invention also relates to food packaged in an HHP-compatible packaging. In a preferred embodiment, the endolysin is present inside such a packaging, preferably in contact with the packed food. In a further preferred embodiment endolysin, e.g. from a bacteriophage of a Gram-positive bacterium, is applied to the food, the food is packed so that the endolysin is inside the packaging and afterwards the packaging is closed and HHP is applied.

Endolysins (or lysins) are bacteriophage-encoded hydrolytic enzymes that break down the peptidoglycan of the bacterial cell wall during the terminal stage of the bacteriophage reproduction cycle. These enzymes compromise the mechanical strength and resistance of the cell wall that is needed to withstand the internal cytoplasmic turgor (osmotic) pressure, causing bacteriolysis and the subsequent release of the bacteriophage progeny.

The use of HHP in combination with an endolysin from a bacteriophage of a Gram-positive bacterium for controlling Gram-positive bacteria in food or a food processing method has not been described in the art. The present inventors found that the combination of HHP with an endolysin behaves synergistically, i.e. the treatment using HHP and endolysin eradicates many more pathogens than expected from a simple addition of HHP and endolysin treatment. The pathogens get killed. Furthermore, the claimed use allows that at a constant pressure level effective dimensions of pathogen inactivation are obtained while the time of HHP application can be markedly reduced. This effect has been observed regardless of the growth phase (exponential or stationary phase) of the cells to be eliminated. Furthermore, the claimed use has the effect that at a constant time of HHP application (constant holding time) less pressure is required in order to obtain equal or even higher inactivation levels. This effect has also been observed regardless of the growth phase (exponential or stationary phase) of the cells to be eliminated. The HHP holding time is preferably in a range of 10 seconds to 3 minutes and, hence, much shorter compared to prior art uses.

The claimed effects have neither been suggested nor foreshadowed in the art.

Aspects of the invention are:
[1] A method for processing a food comprising the steps of subjecting the food to a treatment with (a) an endolysin, preferably an endolysin from a bacteriophage of a Gram-positive bacterium and (b) high hydrostatic pressure (HHP).
[2] The method of [1], wherein the method is for reducing the amount of a Gram-positive bacterium.
[3] The method of [1] or [2], wherein the Gram-positive bacterium is a bacterium of the genus *Staphylococcus* or the genus *Listeria.*
[4] The method of [1] or [3], wherein the endolysin treatment of step (a) is carried out prior to the HHP treatment of step (b).
[5] The method of any one of [1] to [4], wherein the food is a dairy product, a meat product, a fish product, a seafood, a ready-to-eat meal, an egg or an egg-containing food.
[6] The method of any one of [1] to [5], wherein the food is packaged with a packaging material after endolysin treatment of step (a) and prior to HHP treatment of step (b).
[7] The method of any one of [1] to [6], wherein the endolysin treatment of step (a) is carried out by spraying or sprinkling the endolysin onto the food. Alternatively, endolysin may be applied by using an endolysin containing aqueous solution or a fluid containing endolysin in a bath. The food may be dipped and/or maintained in such a bath.
[8] The method of any one of [1] to [6], wherein the food is a liquid food and the endolysin of step (a) is mixed into the liquid food.
[9] The method of any one of [1] to [8], wherein the HHP is at least 100 MPa.
[10] The method of any one of [1] to [9], wherein the endolysin is a wild type endolysin, a recombinant endolysin, or a chimeric endolysin.
[11] The method of [10], wherein the endolysin comprises at least one enzymatically active domain (EAD) and at least one cell binding domain (CBD).
[12] Use of high hydrostatic pressure (HHP) and an endolysin from a bacteriophage of a Gram-positive bacterium for processing a food.
[13] The use of [12] for controlling Gram-positive bacteria in the food processing method.
[14] A food packaged in an HHP-compatible packaging, wherein the food has been packaged before high hydrostatic pressure (HHP) treatment with the endolysin from a bacteriophage of a Gram-positive bacterium being inserted into the packaging.
[15] The packaged food of [14], wherein the endolysin is present on a matrix inserted into the packaging.
[16] The packaged food of [15], wherein the matrix is a biodegradable matrix.
[17] The method of any one of [1] to [11], wherein for a predetermined pressure level the time of HHP application required for a 5-log reduction of the endolysin-sensitive bacterium is shorter as compared to the time of HHP application required for said 5-log reduction when using HHP in the absence of the endolysin.
[18] The method of any one of [1] to [11], wherein for a predetermined time of HHP application the pressure level required for a 5-log reduction of the endolysin-sensitive bacterium is lower as compared to the pressure level required for said 5-log reduction when using HHP in the absence of the endolysin.

### BRIEF DESCRIPTION OF THE DRAWINGS

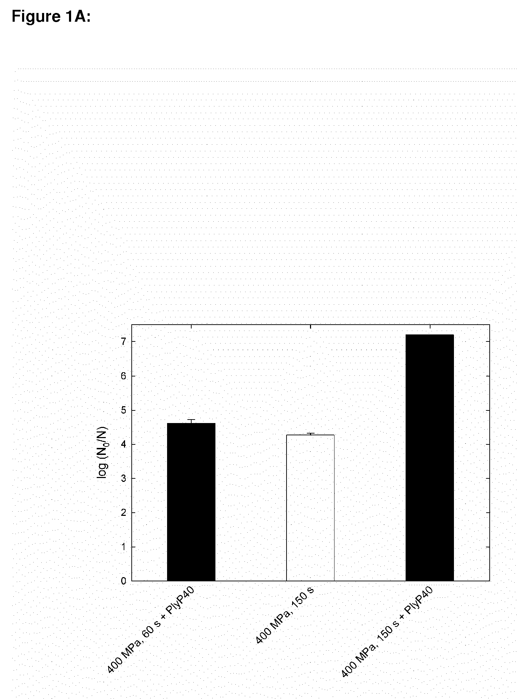

**Figure 1A** shows the inactivation of exponential phase cells in buffer subjected to HHP treatment with or without endolysin at constant pressure level (black bars: with endolysin PlyP40, white bar: without endolysin).

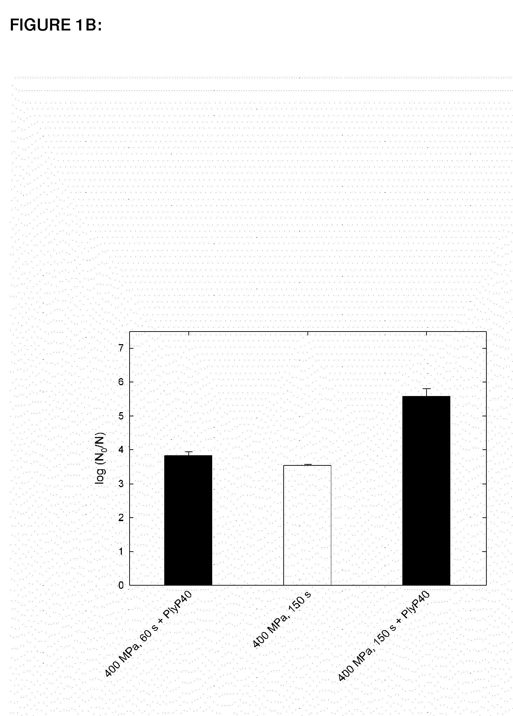

**FIGURE 1B** shows the inactivation of stationary phase cells in buffer subjected to HHP treatment with or without endolysin at constant pressure level (black bars: with endolysin PlyP40, white bar: without endolysin).

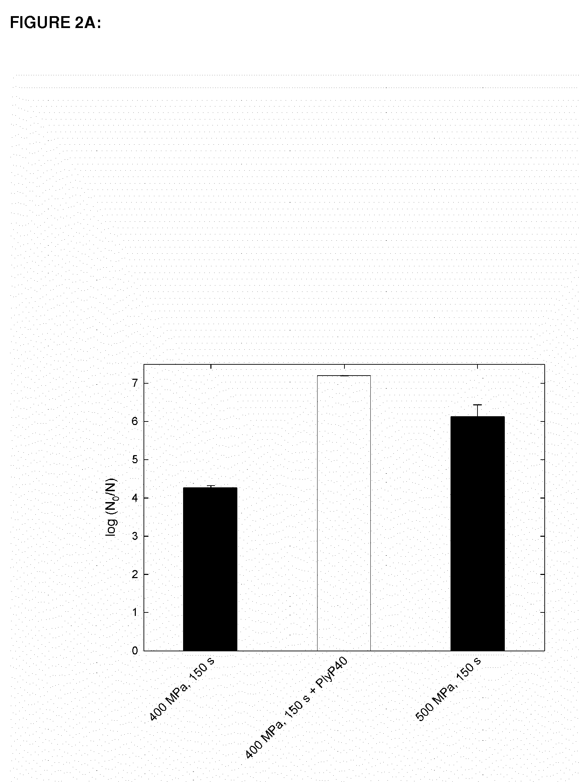

**FIGURE 2A** shows the inactivation of exponential phase cells in buffer subjected to HHP treatment with or without endolysin at constant pressure holding time (black bars: without endolysin, white bar: with endolysin PlyP40).

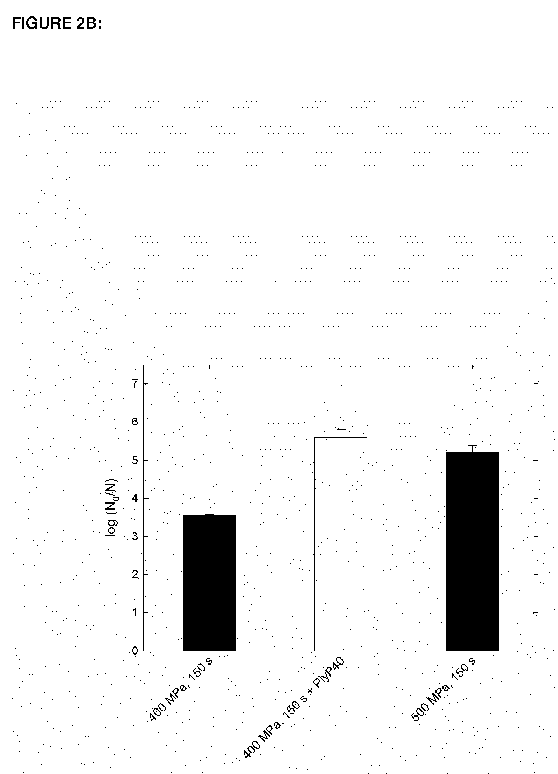

**FIGURE 2B** shows the inactivation of stationary phase cells in buffer subjected to HHP treatment with or without endolysin at constant pressure holding time (black bars: without endolysin, white bar: with endolysin PlyP40).
**FIGURE 3A** shows the inactivation of exponential phase cells in milk subjected to HHP treatment with or without endolysin at constant pressure level (black bars: with endolysin PlyP40, white bar: without endolysin). The HHP holding time could be reduced upon the addition of endolysin achieving equal or even better inactivation levels of *Listeria* cells in milk compared to non-endolysin treatment with HHP.
**FIGURE 3B** shows the inactivation of exponential phase cells in milk subjected to HHP treatment with or without endolysin at constant pressure holding time (black bars: without endolysin, white bar: with endolysin PlyP40). The HHP pressure levels could be reduced upon the addition of endolysin achieving equal or even better inactivation levels of *Listeria* cells in milk compared to non-endolysin treatment with HHP.
**FIGURE 4A** shows the OD₅₉₀ₙₘ growth curve of *L. innocua* TMW 2.105 of Example 1.
Sampling point for middle exponential phase cells indicated by circle.
**FIGURE 4B** shows the PTL temperature (black, dashed line) and pressure (gray) profile monitored during a HHP treatment of Example 1 with a target temperature of 20 °C and a target pressure of 400 MPa held for 150 s.
**FIGURE 4C** shows the experimental setup for PlyP40 treatment of samples with PlyP40 only, HHP only and a combination of both. Times for a HHP treatment at 400 MPa for 150 s are indicated, i.e. 5 min in vessel until ramp is started, and 5 min for pressurization (2 min come-up, 2.5 min holding and 0.5 min release).

### DETAILED DESCRIPTION OF THE INVENTION

High hydrostatic pressure (HHP) is also described in the literature as high pressure processing (HPP) or ultra high pressure (UHP) processing. Therefore, these terms can be used in the present invention interchangeably.

HHP acts instantaneously and uniformly throughout a mass of food independent of size, shape, and food composition. HHP is performed by subjecting an un-packaged or packaged food immersed in a pressure-transmitting liquid to elevated pressures, typically in the order of 200-800 MPa.

HPP subjects liquid and solid foods, with or without packaging, to pressures between 100 and 800 MPa. In the present invention, the foods can be liquid or solid foods. In various embodiments of the present invention, the foods are subjected to HHP with package. In various other embodiments of the present invention, the foods are subjected to HHP without package.

In a preferred embodiment, the HHP is between 300 and 850 MPa, preferably between 350 and 700 MPa, more preferably, 400 to 600 MPa, most preferably 450 - 500 MPa.

### Endolysin:

Bacteriophage (phage) lysins have been designated using various names including lysins, phage-lysins, virolysins, and endolysins. Structurally, lysins are commonly found as modular proteins with at least one domain that confers the enzymatic activity for hydrolysing specific bonds in the murein or peptidoglycan layer of the bacterial cell wall (enzymatic active domain - EAD), and at least one domain that confers binding specificity to a carbohydrate epitope of the cell wall (cell binding domain - CBD). Thus, lysin family members (cell wall or peptidoglycan hydrolases) exhibit a modular design in which a catalytic domain is fused to a specificity or binding domain. During the bacteriophage (phage) reproduction cycle, after assembly of the new phage particles, lysins (endolysins) are produced to destroy the bacterial cell wall.

Endolysins can be divided in into five classes according to their cell wall lytic activities: (1) N-Acetylmuraminidases (lysozymes), (2) Endo- -N-acetylglucosaminidases, (3) Lytic transglycosidases, (4) N-acetylmuramoyl-L-alanine amidases, and (5) Endopeptidases. While the aforementioned (1) to (3) all cleave within the sugar moiety of the peptidoglycan, (4) cleaves at the amid bond between the sugar backbone and the peptide linker and (5) cleaves within the peptid cross bridge. Endolysins are described as having a narrow spectrum regarding their target.

In case of Gram-positive bacteria, endolysins act on cell walls from inside as well as from outside, thus, making these molecules to antimicrobial drug candidates (Borysowski et al. 2006). While bacteriophage host ranges are largely restrictive, i.e. recognizing only one specific antigen on its bacterial host, phage lysins are less restrictive, recognizing a specific carbohydrate molecule common to the particular species of host bacteria. Although the range of bacteria targeted by lysins is less restrictive than the corresponding bacteriophage, lysins still maintain a degree of specificity, having minimal effects on other bacteria including commensal organisms.

In the present invention, the term "CBD" represents the abbreviation for cell binding domain, more specifically cell wall binding domain. Thus, the term "CBD" may also represent the abbreviation for cell wall binding domain. The terms "cell binding domain" and "cell wall binding domain" may be used interchangeably. The structural and functional definition of a CBD according to the present invention is given in WO2011/157448.

In the present invention, "EAD" represents the abbreviation for enzymatic active domain. In the present invention, an EAD has lytic activity against bacteria. Thus, an EAD in accordance with the present invention can also be considered as a lytic domain. A more specific structural and functional definition of an EAD according to the present invention is given given in WO2011/157448. EADs in accordance with the present invention can be isolated from nature or can be produced by recombinant or synthetic means.

In the literature, the terms "bacteriophage lysins", "phage endolysins", "endolysins", "virolysins" and "lysins" are often interchangeably used. Thus, in the present invention, the terms "bacteriophage lysins", "phage endolysins", "endolysins" and "lysins" can be used interchangeably while defining the same kind of enzymes, namely bacterial cell wall-hydrolyzing enzymes synthesized during the late phase of gene expression in the lytic cycle of phage multiplication. By way of another definition, endolysin are enzymes encoded by double stranded (ds) DNA phage genomes that lyse bacterial cell walls. In general, in the present invention the term "bacteriophage" or "phage" means "lytic bacteriophage" or "lysogenic bacteriophage" ("lytic phage" or "lysogenic phage").

A "phage" or "bacteriophage", as used herein, relates to the well-known category of viruses that infect bacteria. Phages include DNA or RNA sequences encapsidated in a protein envelope or coat ("capsid").

In the present invention, lysine may be a chimeric polypeptide which comprises a combination of two or more domains selected from CBDs and EADs, which is as such not found in nature. Preferably, the domains combined in a chimeric polypeptide are of different source or origin. Thus, a chimeric polypeptide of the present invention may comprise a CBD and an EAD from the same source or origin, provided that the chimeric polypeptide comprises at least one further CBD and/or EAD from a different source or origin. Furthermore, a chimeric polypeptide of the present invention may comprise a CBD and an EAD from the same source or origin if the combination of domains from the same source or origin is as such not found in nature. In the present invention, the term "heterologous" may be used interchangeably with the term "chimeric".

In the present invention, the term "domain(s) of different source or origin" includes "domain(s) of a different source or origin of organism" and "domain(s) of a different source or origin of enzyme".

A chimeric polypeptide of the present invention may comprise more than one EAD and, thus, can act on different cell wall structures, and hence has the potential to treat two or more different bacterial infections at the same time.

An EAD in accordance with the present invention exhibits lytic activity against a bacterial cell. Thus, an EAD in accordance with the present invention exhibits the activity of inhibition of bacterial growth, including the slowing or stopping of the rate of cell division of bacteria or cessation of bacterial cell division, or to death of bacteria (killing colonizing bacteria).

In various embodiments of the present invention, the EAD is the lytic domain of a bacteriophage endolysin, including bacteriophage endolysins against Gram-positive and Gram-negative bacteria. More preferably, the EAD is the lytic domain of a bacteriophage endolysin, wherein the endolysin is from a bacteriophage that infects a Gram-positive bacterium. In various embodiments the EAD is the lytic domain of a bacteriophage endolysin, wherein the endolysin is from a bacteriophage that infects a Gram-negative bacterium.

As mentioned before, in the present invention bacteriophage lysins (or lysins) are bacterial cell wall-hydrolyzing enzymes synthesized during the late phase of gene expression in the lytic cycle of phage multiplication. As peptidoglycan is the major structural component of bacterial cell walls, in the present invention bacteriophage lysins are preferably peptidoglycan-hydrolysing enzymes. More preferably, in the present invention a bacteriophage lysine is a glycosidase, amidase, or endopeptidase, depending on the type of chemical bond they cleave within the peptidoglycan. Still more preferably, a bacteriophage lysine to be used in the present invention exhibits muramidase activity, glucosaminidase activity, or transglycosylase activity. Thus, in the present invention, a bacteriophage lysine provides at least one of the following enzymatic activities against a peptidoglycan substrate: muramidase activity, glucosaminidase activity, N-acetylmuramyl-L-alanine amidase activity and endopeptidase activity.

By way of another definition, bacteriophage endolysin are enzymes encoded by double stranded (ds) DNA phage genomes that lyse bacterial cell walls. This definition of bacteriophage endolysins is encompassed by the present invention, too.

In various embodiments of the present invention, the EAD is the lytic domain of a bacteriocin, including the lytic domain of a bacteriocin from Gram-positive and Gram-negative bacteria. Preferably, the EAD is the lytic domain of a bacteriocin from a Gram-positive bacterium. In various embodiments, the EAD is the lytic domain of a bacteriocin from a Gram-negative bacterium.

In various embodiments of the present invention, the EAD is the lytic domain of a bacterial autolysin, including autolyins from both Gram-positive and Gram-negative bacteria. Preferably, the EAD is the lytic domain of an autolysin from a Gram-positive bacterium. In various embodiments, the EAD is the lytic domain of an autolysin from a Gram-negative bacterium.

Bacteriophages are not only known to encode and produce lysins, but also so-called tail associated muralytic enzymes (TAMEs), which are likewise capable of hydrolysing bacterial cell walls. While lysins are produced in the final stage of the phage-life cycle to facilitate the release of progeny phage from the host bacterium, TAMEs are, in contrast, structural proteins necessary during the first stage of the process of infection of a host cell. The first stage of the phage infection process comprises the steps of adsorption to and penetration of the host cell, which is mediated using, inter alia, the TAME. Many but not all phages have tails attached to the phage head. Thus, in various embodiments of the present invention, the EAD is a bacteriophage tail-associated protein having lytic activity. Preferably, the EAD is a tail-associated protein having lytic activity of phages that infect Gram-positive hosts. In various embodiments, the EAD is a tail-associated protein having lytic activity of phages that infect Gram-negative hosts. Bacteriophage tail-associated proteins typically mediate the recognition and attachment of the phage to the target host, and some of them possess cell wall degrading activities, which assist in penetration of phage components into the host.

In various embodiments of the present invention, the EAD is derived from bacteriophage tail-equivalents in caudovirales, which provide means for the phage to enter a bacterial host from the external environment.

A chimeric polypeptide obtainable by the methods of the present invention may comprise more than one CBD and, thus, can bind to different cell wall structures, and hence has the potential to treat two or more different bacterial infections at the same time.

In the present invention, any kind of CBD can be used in the methods of the present invention and includes cell-binding domains, which are part of proteins binding to a target bacterial cell, specifically to the cell wall of a target bacterium. Thus, in the present invention, the CBDs are specifically cell wall-binding domains. In general, a CBD in accordance with the present invention binds to bacterial cells, specifically to cell walls of target bacteria, more specifically to cell wall components produced by a target cell, which are non-covalently or covalently associated with the cell wall of a target cell. In other words, the cell-binding domain or cell wall-binding domain is that part of a cell binding protein or cell wall binding protein, which is necessary and sufficient for the binding ability to a bacterial cell or target bacterial cell, specifically for the binding ability to the cell surface of a bacterial cell or target bacterial cell. The bacterial cell or target bacterial cell includes any Gram-positive or Gram-negative bacterial cell.

In various preferred embodiments of the present invention, the CBD is the cell-binding domain of a bacteriophage endolysin, including bacteriophage endolysins against Gram-positive and Gram-negative bacteria. More preferably, the CBD is the cell-binding domain of a bacteriophage endolysin, wherein the endolysin is from a bacteriophage that infects a Gram-positive bacterium. In various embodiments the CBD is the cell-binding domain of a bacteriophage endolysin, wherein the endolysin is from a bacteriophage that infects a Gram-negative bacterium.

In various preferred embodiments of the present invention, the CBD is the cell-binding domain of a bacteriocin, including the cell-binding domain of a bacteriocin from Gram-positive and Gram-negative bacteria. Preferably, the CBD is the cell-binding domain of a bacteriocin from a Gram-positive bacterium. In various embodiments, the CBD is the cell-binding domain of a bacteriocin from a Gram-negative bacterium.

In various preferred embodiments of the present invention, the CBD is the cell-binding domain of a bacterial autolysin, including autolysins from both Gram-positive and Gram-negative bacteria. Preferably, the CBD is the cell-binding domain of an autolysin from a Gram-positive bacterium. In various embodiments, the CBD is the cell-binding domain of an autolysin from a Gram-negative bacterium.

CBDs to be used in the present invention are capable of specifically binding to bacteria. Thus, while CBDs in accordance with the present invention exhibit cell binding activity, they have no or no significant hydrolytic activity. No or no significant hydrolytic activity in this context is intended to describe the situation whereby the hydrolytic activity is not sufficient to prevent the application of a CBD to bind to a bacterial cell, more specifically to a bacterial cell wall. A CBD to be used in the present invention is supposed to be a protein, which does not have any hydrolytic activity itself. This also applies to fragments and variants of a CBD according to the present invention, which are also encompassed by the present invention.

The present invention encompasses DNA sequences of any known CBDs and EADs. In the present invention, also DNA sequences coding for functional fragments of known CBDs and EADs as well as DNA sequences coding for mutants and variants of known CBDs and EADs having the same biological function or activity as the known reference CBD or EAD may be used in the present invention, i.e. binding to the cell wall of a bacterial cell and exhibiting the activity of hydrolyzing a bacterial cell wall, respectively.

As used herein, the terms "mutant" and "variant" refer to a polypeptide, which possesses biological function or activity identified through a defined functional assay and associated with a particular biologic, morphologic, or phenotypic alteration in a bacterial cell or of a bacterial cell. EADs and CBDs in accordance with the present invention specifically also encompass naturally occurring forms like, for example, alternatively spliced or modified forms and naturally-occurring variants thereof, the DNA sequences coding for which can be used in the present invention.

The DNA sequences encoding fragments and variants of CBDs and EADs that can be used in the present invention include chemically synthesized DNA sequences (synthetic genes).

Modifications of CBDs and EADs in accordance with the present invention may result in mutant or variant proteins having substantially equivalent activity to a reference CBD or EAD described herein. Such modifications may be deliberate, as by site-directed mutagenesis, or may occur by spontaneous changes in nucleotide and amino acid sequences where these changes produce modified polypeptides having substantially equivalent activity to the respective reference CBD or EAD. Any polypeptides produced by minor modifications of a known CBD or EAD primary amino acid sequence are included herein as long as the biological activity of a cell wall binding domain or an enzymatic active domain exhibiting lytic activity is present. DNA sequences encoding such modified CBD and EAD polypeptides may also be used in the present invention.

As used herein, "substantially equivalent activity" refers to polypeptides, wherein changes in one or more nucleotide bases of the respective nucleotide sequence encoding the polypeptide result in substitution of one or more amino acids, but do not affect the functional properties of the polypeptide encoded by the nucleotide sequence. "Substantially equivalent activity" also refers to modifications of CBD and/or EAD encoding nucleic acid sequences such as deletion or insertion that do not substantially affect the functional properties of the resulting transcript and/or protein. It is therefore understood that in the present invention more than the nucleotide or amino acid sequences of known CBDs and EADs can be used, i.e. including functional equivalents thereof.

CBDs and EADs for use in the present invention may be identified by analysis of genome sequences using the NCBI website (http://www.ncbi.nlm.nih.gov); specifically, ORF Finder at the NCBI website may be used for identification (http://www.ncbi.nlm.nih.gov/gorf/gorf.html). Sequences of predicted proteins can be scanned for homology with known proteins using BLAST searches via the NCBI website (http://www.ncbi.nlm.nih.gov/BLAST). Multiple sequence alignments of homologous genes and proteins can be performed using ClustalW at the EBI website (htt :/iwww.ebi.ac.uk/Tools/clustalw2/index.html).

In particular, with respect to endolysins the skilled person is in the position to identify CBDs and EADs by homology search in the genome of bacteria and bacterial phages and/or functional screening of DNA libraries of phage genomes. Such homology searches may not only target lysine genes, but also the corresponding holin genes as the holin and lysine happen to be encoded adjacently in a particular genome. By targeting holing genes, it is thus possible to identify adjacent lysins. In addition, bacteriophage endolysin CBDs and EADs may be identified experimentally as described, for example, in Loessner et al. 2002 and Korndörfer et al. 2006, i.e. by determining the domain structure of an endolysin and elucidating the cell wall binding and lytic function of the respective domains. Bacteriophage lysins to be analyzed for CBDs and EADs may be identified by the method described in Schuch et al. 2009. As mentioned therein, the techniques described can be adapted to identify lysins from any phage infecting Gram-positive or even Gram-negative bacteria. Furthermore, endolysin CBDs and EADs may be identified using DNA libraries as described in Schmitz et al. 2008.

Likewise, with respect to autolysins and bacteriocins, the skilled person is in the position to identify CBDs and EADs by homology search in the genome of bacteria. CBDs and EADs of autolysins and bacteriocins may also be identified experimentally. Basically, the embodiments according to the present invention are characterized by binding a first domain sequence, which may be a CBD or an EAD and which may be part of a ligation construct of two or more domain sequences selected from CBD and EAD sequences, to a solid support using a tag labelling of said first domain sequence to be bound to the solid support. Furthermore, the embodiments according to the present invention are basically characterized by ligating one or more domain sequences selected from CBD and EAD sequences to said first domain sequence when bound to the solid support and/or to a ligation construct of two or more domain sequences selected from CBD and EAD sequences, which is bound to the solid support phase by said first domain sequence being bound to the solid support. Thus, ligating one or more domain sequences selected from CBD and EAD sequences includes not only ligating one or more domain sequences selected from CBD and EAD sequences to a single first domain sequence originally bound to the solid support, but also ligating one or more domain sequences selected from CBD and EAD sequences to a ligation construct, which comprises two or more domain sequences and which was originally bound to the solid support by a first domain sequence. Thus, the ligation steps result in ligation products of one or more domain sequences selected from CBD and EAD sequences to a single first domain sequence bound to a solid support or one or more domain sequences selected from CBD and EAD sequences to a ligation construct of two or more domain sequences selected from CBD and EAD sequences, which was originally bound to the solid support by a first domain sequence. Still further, the embodiments according to the present invention are basically characterized by releasing the ligation product from the solid support after ligation of one or more domain sequences to said first domain sequence bound to the solid support and/or to the ligation construct, which was originally bound to the solid support phase by said first domain sequence being bound to the solid support. Thus, the step of releasing a ligation product from the solid support after performing one or more steps of ligation of one or more domain sequences selected from CBD and EAD sequences provides a DNA coding for a polypeptide, which can then be proven as a lytic chimeric polypeptide in accordance with the present

In one aspect, endolysins of the present invention are:
[1] A polypeptide comprising a first portion and a second portion joined by a linker, wherein
   (a) said first portion comprises an amino acid sequence of at least one enzymatic active domain (EAD) selected from
      (i) the lytic domain of a bacteriophage lysin;
      (ii) the lytic domain of a bacteriocin;
         or (iii) the lytic domain of a bacterial autolysin, and
   (b) said second portion comprises at least one amino acid sequence of a cell binding domain (CBD) selected from
      (i) the cell binding domain of a bacteriophage lysin
      (ii) the cell binding domain of a bacteriocin
         or (iii) the cell binding domain of an autolysin.
[2] A polypeptide comprising a lytic domain having at least 80%, preferably 90%, amino acid sequence identity with the polypeptide of SEQ ID NO: 1. Preferably, the polypeptide is capable hydrolyzing the peptidoglycan of a Gram-positive bacterium, e.g. S.aureus.
[3] A polypeptide comprising a cell binding domain having at least 80%, preferably 90%, amino acid sequence identity with the polypeptide of SEQ ID NO: 2. Preferably, the polypeptide is capable of binding to the bacterial cell wall of a Gram-positive bacterium, e.g. S.aureus.
[4] A polypeptide having at least 80%, preferably 90%, amino acid sequence identity with the polypeptide of SEQ ID NO: 3. Preferably, the polypeptide is capable of a) binding to the bacterial cell wall of a Gram-positive bacterium, e.g. Listeria, and b) hydrolyzing the peptidoglycan of a Gram-positive bacterium, e.g. Listeria.
[5] A polypeptide having at least 80%, preferably 90%, amino acid sequence identity with the polypeptide of SEQ ID NO: 4. Preferably, the polypeptide is capable of a) binding to the bacterial cell wall of a Gram-positive bacterium, e.g. Listeria, and b) hydrolyzing the peptidoglycan of a Gram-positive bacterium, e.g. Listeria.
[6] A polypeptide having at least 80%, preferably 90%, amino acid sequence identity with the polypeptide of SEQ ID NO: 5. Preferably, the polypeptide is capable of a) binding to the bacterial cell wall of a Gram-positive bacterium, e.g. Listeria, and b) hydrolyzing the peptidoglycan of a Gram-positive bacterium, e.g. Listeria.
[6] A polypeptide having at least 80%, preferably 90%, amino acid sequence identity with the polypeptide of SEQ ID NO: 6. Preferably, the polypeptide is capable of a) binding to the bacterial cell wall of a Gram-positive bacterium, e.g. Listeria, and b) hydrolyzing the peptidoglycan of a Gram-positive bacterium, e.g. Listeria.
[7] A polypeptide having at least 80%, preferably 90%, amino acid sequence identity with the polypeptide of SEQ ID NO: 7. Preferably, the polypeptide is capable of a) binding to the bacterial cell wall of a Gram-positive bacterium, e.g. S.aureus, and b) hydrolyzing the peptidoglycan of a Gram-positive bacterium, e.g. S.aureus.

### Packaging

The packaging material needs to be flexible enough to resist compression forces while maintaining physical integrity and suitable barrier properties. No global rules can be given, each package has to be tested under HHP treatment for the pressure applied. Such testing can easily be performed because HHP requires packages to have a hermetic seal, which means that any leakers will be obvious when the package exits the system, i.e., has been subjected to HHP.

### Process temperature

In the present invention, process temperature during pressure treatment can be specified from below 0°C (to minimize any effects of adiabatic heat) to above 100°C.

### Enzyme concentration

Endolysin is employed according to the present invention in an amount between 0,01 µg and 1 mg endolysin per ml food. In a preferred embodiment, endolysin is employed according to the present invention in an amount between 0,1 µg and 100 µg endolysin per ml food. More preferably, endolysin is employed according to the present invention in an amount between 0,2 µg and 20 µg endolysin per ml food. Most preferably, endolysin is employed according to the present invention in an amount between 0,5 µg and 10 µg endolysin per ml food.

In another aspect, endolysin is employed in an amount between 0,01 µg and 1 mg endolysin per cm² of food surface. In a preferred embodiment, endolysin is employed according to the present invention in an amount between 0,1 µg and 100 µg endolysin per cm² of food surface. More preferably, endolysin is employed according to the present invention in an amount between 0,2 µg and 20 µg endolysin per cm² of food surface. Most preferably, endolysin is employed according to the present invention in an amount between 0,5 µg and 10 µg endolysin per cm² of food surface.

### Exposure times

In the present invention, exposure times at pressure (i.e. HHP holding times) can range from a millisecond pulse (obtained by oscillating pumps) to a treatment time of 30 minutes. Preferably, HHP holding times are in a range between 1 second and 5 minutes, more preferably, 30 seconds and 3 minutes, most preferably 60 seconds and 150 seconds.

HHP pressure ranges of 300 and 850 MPa (and preferred subranges) can be combined with exposure times of 1 second and 5 minutes (and preferred subranges). A preferred embodiment employs between 400 and 600 MPa for between 60 and 150 seconds.

### HHP in combination with other processing technologies

In various embodiments of the present invention, HHP may be combined with heat.

In various embodiments of the present invention, the step of HHP treatment is performed under HHP and carbon dioxide.

In various other embodiments of the present invention, the step of HHP treatment is combined with irradiation.

The present invention also contemplates the use of HHP in combination with ultrasound and/or heat.

### HHP pulsed application

In the present invention, HHP may be applied as continuous or pulsed HHP treatment.

### pH

pH ranges in which the embodiments of the present invention may be applied depend from the pH stability of the food to be treated. Typically, the pH of the composition is from about 3.3 to 9.0, preferably from about 4.0 to 8.0, more preferably 4.5 to 8.0, most preferably 5.0 to 8.0.

### Equipment for HHP treatment

### Equipment for HHP treatment of foods

### Foods

In the present invention, foods suitable for HHP include, but are not limited to, low-medium moisture, semi-solid/solid foods, vacuum packaged. Such foods include any one of meat product, dry-cured or cooked meat products, sausages, cheeses, preferably soft cheese, fish, kipper, seafood, marinated products, ready-to-eat meals, eggs and egg-containing food, flan and sauces. Among these foods, seafood and ready-to-eat meals are preferred. Cheeses are also preferred foods in the present invention. In the present invention, foods suitable for HHP also include, but are not limited to, high moisture, solid foods, vacuum packaged. Such foods include any one of fruits, marmalades/jams, and vegetables. Among these foods, vegetables are preferred. In the present invention, foods suitable for HHP further include, but are not limited to, high moisture, liquid foods in plastic bottle/flexible packaging. Such foods include any one of dairy products, fruit juices, bioactive beverages. Among these foods, dairy products and fruit juices are preferred.

"A dairy product" or "dairy component" includes milk, cream, yogurt, sour cream, condensed milk and cheeses such as cottage cheese, quark, cream cheese, ricotta, mozzarella and Burgos-type cheeses. The dairy product or dairy component may include up to 50 wt.% of other ingredients such as sugars, acids, thickeners and flavourings.

Food to be preserved from S. aureus is for example meat, pies, ham, milk, dairy products, egg products, salads, creams, as well as ice cream, pasta, pastries.

Food to be preserved from Listeria is for example raw milk and raw milk products (e.g. raw milk cheese), soft cheese (Roquefort, Brie), butter, mayonnaise, kipper, seafood, raw meat, raw meat products, raw sausage (tea sausage spread, salami), ready-to-eat meals.

### Pathogens to be treated

Food is to be conserved against Gram-positive pathogens to avoid changes in quality, e.g. changes of taste, smell, texture, appearance ort he like.

Main pathogens in vegetables and fruits are pathogens of the taxonomic units Erwinia, Pseudomonas, Corynebacterium, the last being Gram-positive.

Raw meat, seafood or fish may contain pathogns of the taxonomic units Acinetobacter, Aeromonas, Pseudomonas, Micrococcus, Achromobacter, Flavobacterium, Proteus, Salmonella, Escherichia, Campylobacter, Listeria. Among these Micrococcus and Listeria are Gram-positive.

Milk and dairy products may contain pathogens of the taxonomic units Streptococcus, Leuconostoc, Lactococcus, Lactobacillus, all of which are Gram-positive. Further they can contain Pseudomonas and Proteus which are Gram-negative.

Sugar containing food may contain Gram-positive taxonomic units like Clostridium or Bacillus, and Gram-negative bacteria like Flavobacterium.

Food is often poisoned by toxins segregated from pathogens. Among these pathogens are Staphylococcus aureus, Clostridium botulinum and Bacillus cereus, which are all Gram-positive.

Pathogens found in food are also supposed to cause infecions, either upon incorparation of the pathoges into the body with the food or after the segregation of toxins after pathogen incorporation into the body. Important in the context of the present invention are Listeria, such as Listeria monocytogenes, which are Gram-positive. Other pathogs are Gram-negative, such as Salmonella, e. g Salmonella enteritidis und Salmonella typhimurium, E. coli, e.g. EHEC, ETEC, EIEC, EPEC, EAEC, Campylobacter , e. g. Campylobacter jejuni, Shigella, Yersinia, e.g.. Yersinia enterocolitica, Vibrio, e. g. V. cholaera or V. parahaemolyticus

Pathogens which shall be eradicated or reduced using the embodiments of the present invention are Pathogens of public health concern,_preferably Gram-positive bacteria, more preferably bacteria of the genus *Staphylococcus* or the genus *Listeria.*

These pathogens may be treated by employing an endolysin of the present invention, e. g. a recombinant endolysin, e. g. a chimeric endolysin like an enzyme comprising the lytic domain (EAD) of an endolysin from a Grampositive bacterium bacteriophage such as a *Staphylococcus* bacteriophage and the cell binding domain (CBD) of lysostaphin. Preferred endolysins are Prf-133 (WO2011076432), PlyP40 (WO2010010192), Ply511 (WO9607756), PlyP825 (WO2012159774) and GU3-825 (WO2012159773).

### Pharmaceutical and cosmetic products

The present invention also provides the use of high hydrostatic pressure (HHP) and an endolysin from a bacteriophage of a Gram-positive bacterium for processing a pharmaceutical or a cosmetic product. Accordingly, the present invention provides a method for processing a pharmaceutical or cosmetic product comprising the steps of subjecting the pharmaceutical or cosmetic product to a treatment with (a) an endolysin from a bacteriophage of a Gram-positive bacterium and (b) high hydrostatic pressure (HHP).

### REFERENCES

Masschalck, B., Deckers, D., & Michiels, C. W. (2002). Lytic and nonlytic mechanism of inactivation of gram-positive bacteria by lysozyme under atmospheric and high hydrostatic pressure. Journal of Food Protection, Vol. 65(12), 1916-1923.
Nakimbugwe, D., Masschalck, B., Atanassova, M., Zewdie-Bosuner, A., & Michiels, C. W. (2006). Comparison of bactericidal activity of six lysozymes at atmospheric pressure and under high hydrostatic pressure. International Journal of Food Microbiology, Vol. 108, 355-363.
Tabla, R., Martinez, B., Rebollo, J. E., Gonzales, J., Ramitez, M. R., Roa, I., Rodriguez, A., & Garcia, P. (2012). Bacteriophage performance against Staphylococcus aureus in milk is improved by high hydrostatic pressure treatments. International Journal of Food Microbiology, Vol. 156, 209-213.
Heremans, K. (1995). High pressure effects on biomolecules. D. A. Ledward, D. E. Johnston, R. G. Earnshaw and A. P. M. Hasting. High Pressure Processing of Foods. Leicestershire, UK. Nottingham University Press.

### EXAMPLES

The present invention is illustrated by the following examples, which should not be construed as limiting the scope of the claims to any extent.

### Example 1: Synergistic effect of endolysin and HHP in buffer

### Strain and growth conditions

*Listeria (L.) innocua* was used to determine the effect of endolysin in combination with high hydrostatic pressure (HHP) on the inactivation of this organism. *L. innocua* strain TMW 2.105 (ATTC 33091) was selected.

100 µL of a -80°C glycerol (70%) stock were used to inoculate 100 mL Tryptic Soy Broth + Yeast Extract (TSBYE) containing tryptic casein digest (17 g/L; Merck, Darmstadt, Germany), soy peptone (3 g/L; Oxoid Ltd., Hampshire, UK), NaCl (5 g/L; Roth, Darmstadt, Germany), K₂HPO₄ (2.5 g; Sigma-Aldrich Chemie, Steinheim, Germany), glucose (autoclaved separately, 2.5 g; Merck, Darmstadt, Germany) and yeast extract (6 g/L; Roth, Darmstadt, Germany). Cells were incubated overnight (18h +/- 2h) shaking at 30°C. 200 µL overnight culture were used to inoculate another 20 mL TSBYE followed by further incubation shaking at 30°C. Culture purity was routinely checked using MALDI-TOF MS.

### Harvesting of cells from different growth phases

OD₅₉₀ₙₘ growth curves were determined to estimate sampling time for cells in different growth phases. Cells situated in the middle exponential (defined as OD₅₉₀ₙₘ = 0.8, approx. 6 h) and late stationary (24 h) phase were harvested by centrifugation (7000 x g, 10 min). After discarding the supernatant cell pellets were resuspended in Imidazole Phosphate Buffer (IPB, 50 mM, pH 6.2) to give an initial concentration of 10⁷ CFU/mL. IPB was composed of 50 mM imidazole mixed 1:1 with 50 mM sodium phosphate buffer (50 mM Na₂HPO₄ titrated with NaH₂PO₄) and 50 mM NaCl. Immediately before use, 0.1% Tween 20 were added to IPB. Samples were kept on ice until treated.

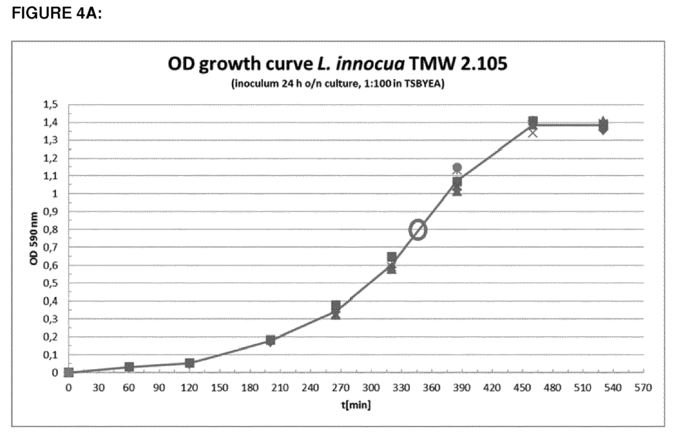

Figure 4A shows the OD₅₉₀ₙₘ growth curve of *L. innocua* TMW 2.105. Sampling point for middle exponential phase cells indicated by circle.

### Concentration-dependent inactivation of L. innocua at ambient pressure

The concentration-dependent inactivation of *L. innocua* at ambient pressure was determined. The endolysin PlyP40 was serially diluted in IPB to give 0.0000128, 0.000064, 0.00032, 0.0016, 0.008, 0.04 and 0.2 mg/ml. As the storage buffer (Tris, pH 8, 100 mM NaCl) for the endolysin PlyP40 differed from the working buffer IPB with respect to its pH and NaCl concentration, modified IPB with suitable pH (5.6) and NaCl content (31.8 mM) was used for the first endolysin dilution step. 50 µl of each protein concentration was added to 450 µl cells in IPB (1:10 dilution) to yield final concentrations of 0.00128, 0.0064, 0.032, 0.16, 0.8, 4 and 20 µg/ml. Cells were coincubated with PlyP40. The inactivation of *L. innocua was* determined after co-incubation of cells with PlyP40 for 1h at 30°C. For this purpose, 100 µL of appropriate dilutions were spread plated on TSBYE Agar (15 g/L BD European agar, BD, Heidelberg, Germany). CFU of surviving cells were determined after an incubation at 37°C for 32h +/- 1 h and 102h +/- 1 h.

### Synergistic effect of endolysin and HHP in buffer

Based on the results obtained (data not shown) for the concentration-dependent inactivation at ambient pressure, final PlyP40 concentrations of 0.02 and 0.2 µg/ml were used to test the effectiveness of treatments combining endolysin and HHP. Culture handling and protein preparation was done as described above. Target pressure/holding combinations were 300 MPa/150 s, 400 MPa/60 s and 150 s, and 500 MPa/150 s at a target temperature of 20°C. Such process conditions were selected on the basis of previous results obtained for the HHP inactivation of *L. innocua* and severe enough to result in significant but no total inactivation of the *L. innocua* population.

For HHP treatments, samples were filled into cryovials (1.8 mL Nunc CryoTube^{™} Vials; ThermoScientific, Bonn, Germany) avoiding air bubbles inside the vials and stored on ice until treated. Pressure treatments were conducted using a dual vessel HP unit (V = 2 x 7 mL; Knam Schneidetechnik GmbH, Langenargen, Germany) with a 60:40 mixture of polyethylene glycol (PEG 400; Roth, Karlsruhe, Germany) and water as pressure transferring liquid (PTL). Temperature inside the pressure vessels was controlled via thermostating vessel jackets using an external refrigerated/heating circulator (FC 600; JULABO Labortechnik GmbH, Seelbach, Germany) with the initial temperature set to 5 x 10⁻³°C/target pressure [MPa] below the target temperature. Standard compression and decompression rates were set to 200 and 800 MPa/min, respectively. Under these conditions, adiabatic heating of the PTL did not exceed 3 °C.

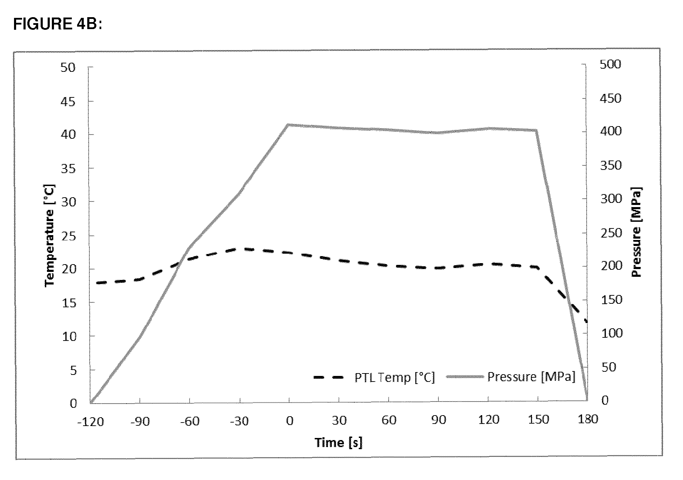

Figure 4B shows the PTL temperature (black, dashed line) and pressure (gray) profile monitored during a HHP treatment of Example 1 with a target temperature of 20 °C and a target pressure of 400 MPa held for 150 s.

Samples intended for pressurization and containing endolysin (PlyP40 + HHP samples) were placed into the HHP unit. To standardize the treatments, the starting point for the pressure ramps defined as exactly 5 min after placing the samples into the unit.

Samples to determine the effect of HHP alone were prepared adding the same amount of pure IPB buffer without endoylsin to the cells as it was done for PlyP40 samples. The subsequent HHP treatment was identical for samples with our without PlyP40.

Samples to determine the effect of the endolysin alone were prepared and packed identically to the samples intended for pressurization, however, placed into a waterbath at 20 °C (ambient pressure) at the time point when the other samples were placed into the HHP unit. This time point was defined as starting point of an incubation period lasting 1 h in total.

Regardless of the treatment parameters (pressure level and holding time) the parallel treatment of samples with or without pressure, with or without endolysin or with a combination of both was followed by an incubation at 20°C for the rest of the 1 h incubation period. Thereafter, samples were placed on ice again and the survivors were determined via plating appropriate dilutions as described above.

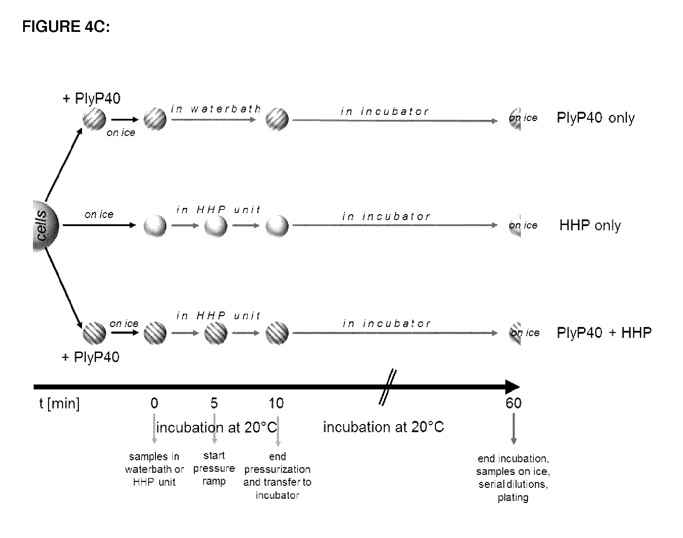

Figure 4C shows the experimental setup for a treatment of samples with PlyP40 only, HHP only and a combination of both. Times for a HHP treatment at 400 MPa for 150 s are indicated, i.e. 5 min in vessel until ramp is started, and 5 min for pressurization (2 min come-up, 2.5 min holding and 0.5 min release).

Additionally negative controls treated identically to PlyP40 samples but without *L. innocua* cells were plated to exclude the presence of any contaminations in the buffers used or during sample handling. All experiments were conducted in triplicate independently from each other.

### Example 2: Synergistic effect of endolysin and HHP in milk

### Strain and growth conditions

The *Listeria (L.) monocytogenes* type strain 53 XXIII (serovar 1/2a; TMW 2.1512, DSM 20600, ATCC 15313, NCTC 10357) was used to determine the effect of endolysin in combination with high hydrostatic pressure (HHP) on the inactivation of this organism. 100 µL of a -80°C glycerol (70%) stock were used to inoculate 100 mL Tryptic Soy Broth + Yeast Extract (TSBYE) containing tryptic casein digest (17 g/L; Merck, Darmstadt, Germany), soy peptone (3 g/L; Oxoid Ltd., Hampshire, UK), NaCl (5 g/L; Roth, Darmstadt, Germany), K₂HPO₄ (2.5 g; Sigma-Aldrich Chemie, Steinheim, Germany), glucose (autoclaved separately, 2.5 g; Merck, Darmstadt, Germany) and yeast extract (6 g/L; Roth, Darmstadt, Germany). Cells were incubated overnight (18 +/- 2h) shaking at 37 °C. 200 µL overnight culture were used to inoculate another 20 mL TSBYE followed by further incubation shaking at 37 °C.

### Synergistic effect of endolysin and HHP in milk

Exponential phase cells (OD₅₉₀ = 0.8 ± 0.05) were harvested by centrifugation (7000 × g, 10 min). Cell pellets were resuspended in milk obtained from a local supermarket (homogenized UHT milk, 1.5 % fat content) to give an initial concentration of 10⁷ CFU/mL. The endolysin PlyP40 (initial concentration 1 mg/ml) was diluted in milk to give a concentration of 200 µg/ml.

200 µl of diluted PlyP40 (200 µl milk for the control sample) were added to 1800 µl cell suspension to yield a final concentration 20 µg/ml (control: 0 µg/ml). Samples were divided into two 1 mL aliquots. HHP samples were place into a preheated high pressure vessel and reference samples were placed into a preheated waterbath at 30 °C, respectively. The total time for coincubation of cells with endolysin at 30 °C was 1 h. For HHP treatments, samples were filled into cryovials (approx. 0.9 mL in 0.5 mL Nunc CryoTube^{™} Vials; ThermoScientific, Bonn, Germany) avoiding air bubbles inside the vials. Pressure treatments were conducted using a dual vessel HP unit (V = 2 × 7 mL; Knam Schneidetechnik GmbH, Langenargen, Germany) with a 60:40 mixture of polyethylene glycol (PEG 400; Roth, Karlsruhe, Germany) and water as pressure transferring liquid (PTL). Temperature inside the pressure vessels was controlled via thermostating vessel jackets using an external refrigerated/heating circulator (FC 600; JULABO Labortechnik GmbH, Seelbach, Germany) with the initial temperature set to 5 x 10⁻³°C/target pressure [MPa] below the target temperature. Standard compression and decompression rates were set to 200 and 800 MPa/min, respectively. Under these conditions, adiabatic heating of the PTL did not exceed 3 °C. Target pressure / holding combination used were 400 MPa / 60 s, 400 MPa / 150 s and 500 MPa /150 s at 30 °C. To standardize the treatments, the starting point for the pressure ramps defined as exactly 5 min after placing the samples into the unit. After the HHP treatment, samples were incubated in the waterbath together with the untreated samples for the rest of the 1 h period. The inactivation of *L. monocytogenes* was determined spread plating 100 µL of appropriate dilutions on TSBYE Agar (15 g/L BD European agar, BD, Heidelberg, Germany) in triplicate. CFU of surviving cells were determined after an incubation at 37°C for 72 +/- 1 h.

Additionally, negative controls treated identically to PlyP40 samples but without *L. innocua* cells were plated to exclude the presence of any contaminations in the buffers used or during sample handling. All experiments were conducted in triplicate independently from each other. Samples where a complete inactivation of the cell population was observed, were incubated further at 30 °C followed by spread plating aliquots after 1, 3 and 7 days.

### Short summary

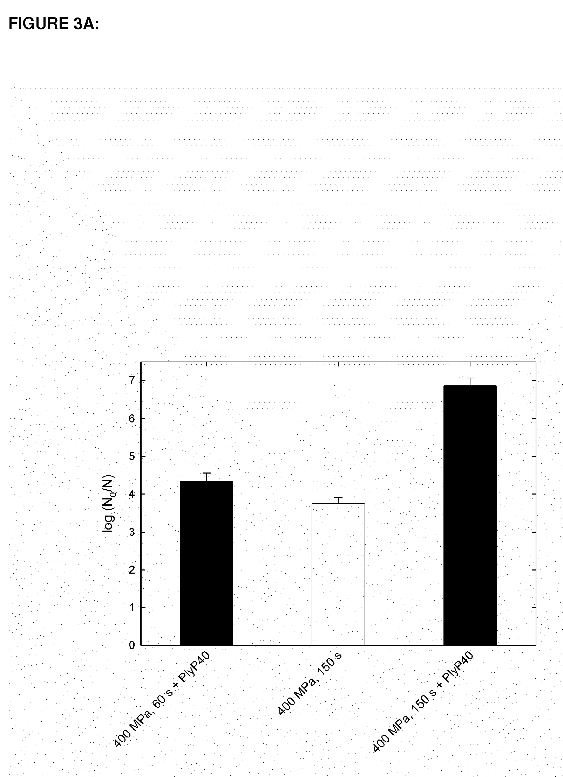

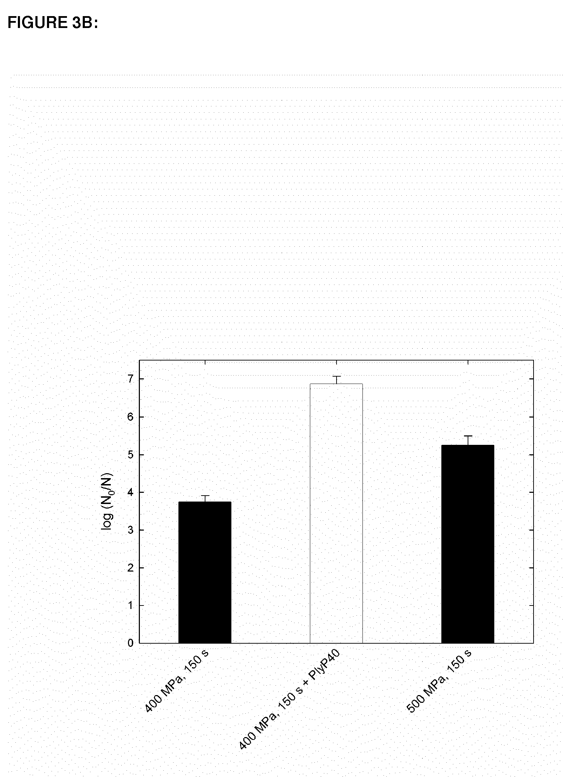

It was observed for HHP/endolysin treatments in buffer, holding time (Figure 3a) or pressure levels (Figure 3b) can be reduced upon the addition of endolysin achieving equal or even better inactivation levels of *Listeria* cells in milk. Inactivation levels are provided in Table 1 (initial cell count: 10⁷ CFU/mL):

| p [MPa] | t [s] | PlyP40 [µg/mL] | log inactivation | s.d. |
|---|---|---|---|---|
| 0 | 0 | 20 | 0.95 | 0.20 |
| 400 | 60 | 0 | 2.45 | 0.12 |
| 400 | 60 | 20 | 4.33 | 0.23 |
| 400 | 150 | 0 | 3.75 | 0.17 |
| 400 | 150 | 20 | 6.87 | 0.20 |
| 500 | 150 | 0 | 5.25 | 0.25 |
| 500 | 150 | 20 | ≥7 | 0.00 |

Complete inactivation was achieved by treatments at 500 MPa for 150 s in the presence of 20 µg/mL PlyP40. Notably, further incubation of such treated milk samples for up to 7 days at 30 °C did not result in any growth of *L. monocytogenes* cells.

It should be noted that numerous modifications and variations can be made without departing from the scope of the present invention defined in the accompanied claims.

Thus, it is to be understood that even though some specific embodiments have been described, they are primarily elucidative examples for the ease of understanding. Obviously, many others are conceivable.

## Claims

1. A method for processing a food comprising the steps of subjecting the food to a treatment with (a) an endolysin, preferably an endolysin from a bacteriophage of a Gram-positive bacterium, and (b) high hydrostatic pressure (HHP).

2. The method of claim 1, wherein the method is for reducing the amount of a Gram-positive bacterium.

3. The method of claim 1 or 2, wherein the Gram-positive bacterium is a bacterium of the genus *Staphylococcus* or the genus *Listeria.*

4. The method of claim 1, 2 or 3, wherein the endolysin treatment of step (a) is carried out prior to the HHP treatment of step (b).

5. The method of any one of claims 1, 2, 3 or 4, wherein the food is a dairy product, a meat product, a fish product, a seafood, a ready-to-eat meal, an egg or an egg-containing food.

6. The method of any one of claims 1 to 5, wherein the food is packaged with a packaging material after endolysin treatment of step (a) and prior to HHP treatment of step (b).

7. The method of any one of claims 1 to 6, wherein the endolysin treatment of step (a) is carried out by spraying or sprinkling the endolysin onto the food or by bathing or dipping the food into an endolysin containing aqueous medium.

8. The method of any one of claims 1 to 7, wherein the food is a liquid food and the endolysin of step (a) is mixed into the liquid food.

9. The method of any one of claims 1 to 8, wherein the HHP is at least 100 MPa.

10. The method of any one of claims 1 to 9, wherein the endolysin is a wild type endolysin, a recombinant endolysin, or a chimeric endolysin.

11. The method of claim 10, wherein the endolysin comprises at least one enzymatically active domain (EAD) and at least one cell binding domain (CBD).

12. Use of high hydrostatic pressure (HHP) and an endolysin from a bacteriophage of a Gram-positive bacterium for processing a food.

13. The use of claim 12 for controlling Gram-positive bacteria in the food processing method.

14. A food packaged in an HHP-compatible packaging, wherein the food has been packaged before high hydrostatic pressure (HHP) treatment with the endolysin from a bacteriophage of a Gram-positive bacterium being inserted into the packaging.

15. The packaged food of claim 14, wherein the endolysin is present on a matrix inserted into the packaging.
